# EUROPEAN PATENT SPECIFICATION

(11) **EP 1 912 728 B1**
(45) Date of publication and mention of the grant of the patent: **01.12.2010**
(21) Application number: 06788733.1
(22) Date of filing: 27.07.2006
(51) Int. Cl.: B01F 5/04, F16K 15/14, E03C 1/046

(54) **MIXING EDUCTOR AND METHOD**
MISCHDÜSE UND VERFAHREN
EJECTEUR MELANGEUR ET PROCEDE

(30) Priority: 02.08.2005 US 195052
(43) Date of publication of application: 23.04.2008
(73) Proprietor: Diversey, Inc., Sturtevant, WI 53177-0902 (US)
(72) Inventor: LOHR, James, H., Union Grove, Wisconsin 53182 (US); BOTICKI, John A., Racine, Wisconsin 53406 (US); BOURNOVILLE, James L., Racine, Wisconsin 53402 (US)
(74) Representative: van Heuvel, Margaretha
(86) International application number: PCT/US2006/029315
(87) International publication number: WO 2007/016297

(56) References cited:
- EP-A- 1 353 012
- US-A- 5 927 338
- US-A1- 2003 034 078

## Description

### TECHNICAL FIELD

This invention relates generally to apparatus employed in the mixing of chemical concentrate with a diluting liquid. More particularly, it relates to an eductor for drawing chemical concentrate from a container and into the diluting liquid wherein the reduced pressure in the eductor can be easily adjusted.

### BACKGROUND ART

The use of eductors for mixing chemical concentrates into a stream of liquid to provide a diluted solution is well known. For example, see U.S. Patents No. 5,927,338 and No. 6,279,598 issued to S.C. Johnson Commercial Markets, Inc.

Eductors without an air gap are known. One is described in U.S. Patent 6,240,983 as well as EP 1 353 012 A1 and US 2003/0034078 A1.

Certain advances in technologies and changes in regulatory communities have given rise to non-air gap means of backflow prevention. One of the new backflow prevention methods is to use an elastomer in a critical path in such a manner that if a backsiphonage occurs, the elastomer will seal the path closed, thus preventing backflow. The atmosphere of an enclosed water supply system lends itself well to Herschel-type venturi systems. Vacuum profiles are based on standard inlet lengths, diameters and cone angles, which are proportional to exit throat lengths, diameters and cone angles. To change a vacuum profile requires a redesign of the entire venturi.

The prior art does not provide a non-air gap eductor wherein the vacuum profile can be changed without redesigning the entire venturi.

Document EP-A-1 353 012 discloses an eductor in accordance with the preamble of claim 1.

The objects of certain embodiments of the invention therefore are:

Providing an improved eductor for a mixing and dispensing apparatus.

Providing an improved non-air gap eductor.

Providing an improved non-air gap eductor wherein the vacuum profile can be changed without redesigning the entire unit.

Providing an improved non-air gap eductor of the foregoing type which can be easily retrofitted.

Providing an improved non-air gap eductor of the foregoing type which can be manufactured at minimal cost.

### SUMMARY OF THE INVENTION

The foregoing objects are accomplished and the shortcomings of the prior art are overcome by the eductor of this invention, as disclosed by claim 1, includes a body member providing a longitudinal axis. A flow path extends longitudinally through the body member, the flow path defined by a first flow guide and a second flow guide, the second flow guide constructed and arranged to receive liquid from the first flow guide. A closed back flow prevention member is operatively associated with the first flow guide. A venturi tube is positioned in the flow path for receiving liquid from the second flow guide, the second flow guide and the venturi tube are connected by a passage portion. There is an opening in the passage. The second flow guide is defined by a tubular portion extending over the opening in the passage. At least one channel is provided laterally to the longitudinal axis for flowing a liquid concentrate into the venturi tube. The flow path further including a discharge passage extending from the venturi tube to the outside of the body member. The extension of the tubular portion over the opening in the passage is designed to afford a desired vacuum profile.

In yet another aspect there is a method of establishing a vacuum profile in a closed back flow prevention eductor which includes extending the tubular portion over the opening in the passage portion.

In another aspect the second flow guide and the tubular portion are in the form of a funnel member.

These and still other objects and advantages of the invention will be apparent from the description which follows. In the detailed description below, a preferred embodiment of the invention will be described in reference to the full scope of the invention. Rather, the invention may be employed in other embodiments.

### BRIEF DESCRIPTION OF THE DRAWINGS

FIG. 1 is a schematic diagram of a type of dispensing equipment with which the new eductor may be used;

FIG. 2 is an elevational view of the eductor;

FIG. 3 is a sectional view of one embodiment of the invention;

FIG. 4 is a sectional view of another embodiment of the invention;

FIG. 5 is a partial enlarged view of the embodiment shown in FIG. 3;

FIG. 6 is a partial enlarged view of the embodiment shown in FIG. 5 taken along line 6--6;

FIG. 7 is a view of the components shown in FIG. 6 with the components displaced;

FIG. 8 is a sectional view of another embodiment of the invention;

FIG. 9 is a view similar to FIG 8 with the embodiment turned 45 degrees; and

FIG. 10 is a view similar to FIG. 9 showing another embodiment of the invention.

### DESCRIPTION OF THE PREFERRED EMBODIMENTS

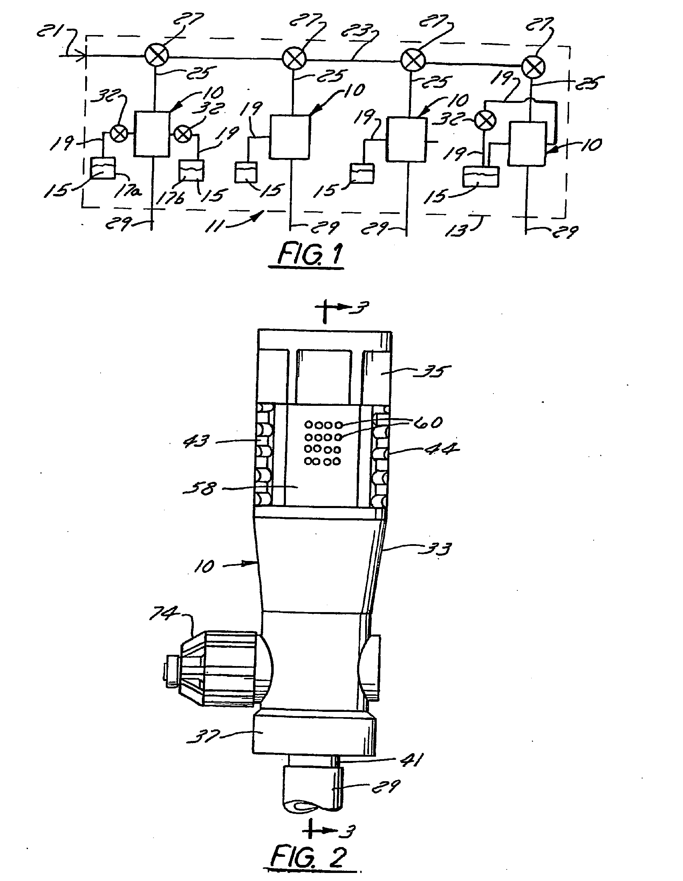

Referring to FIG. 1, there is shown a schematic diagram for a type of dispensing equipment generally in which the eductor 10 of the invention is employed. The equipment 11 has an enclosure 13 and containers 15 in the enclosure 13 or, possibly, outside the enclosure 13 but connected as shown by lines 19. Normally, each container 15 is filled with a different liquid 17a and 17b. But as explained below, there may be occasions where it is desirable to have two containers 15 filled with the same liquid 17.

The inlet line 21 of the equipment 11 is connected to a source of water feeding a header 23. Branch pipes 25 are connected to the header 23 and each branch pipe 25 includes a valve 27 "dedicated" to that pipe 25. When a particular valve 27 is actuated, water flows through the related eductor 10 and mixes a concentrated liquid 17 with such water to form a dilute solution. Each mixed dilute solution is dispensed through a separate tube 29. The amount of concentrate introduced to the eductor 10 can be controlled by the valves 32.

As seen in FIG. 2, the eductor 10 includes a generally tubular body 33 with two opposing ribs 43 and 44. It has an inlet end 35 and an outlet section 37, the latter having an outlet fitting 39 attached thereto. Such fitting 39 has a necked-down portion 41 for connection to outlet tube 29.

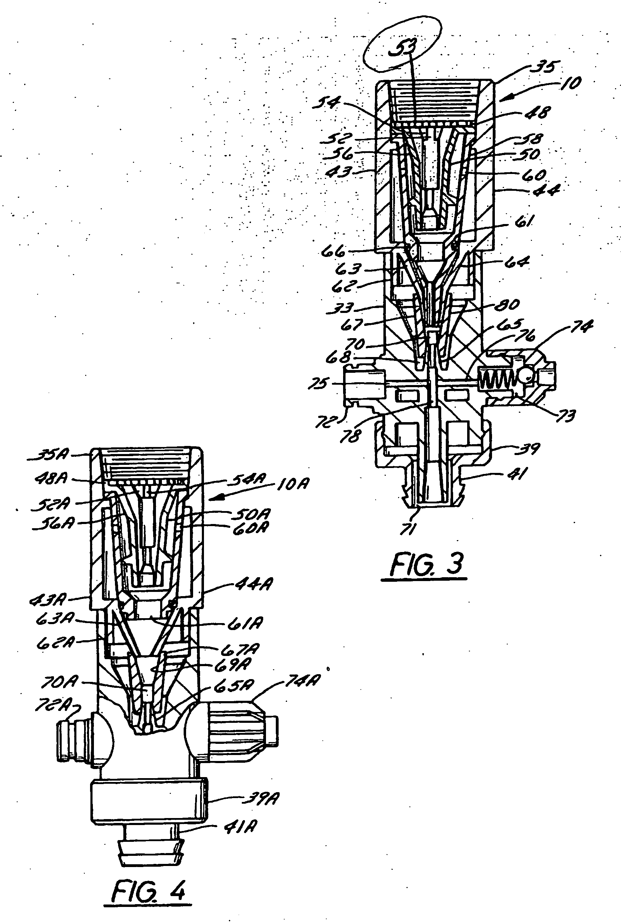

As shown in FIG. 3, the inlet section 35 of eductor 10 includes a core structure 48 with a barrel 50 surrounded by the ribs 52. There are fluid outlets 54 at the top of barrel 50 as well as a resilient sleeve 56 and a seal ring 53. An outer casing 58 surrounds the resilient sleeve and has the vents 60. These previously described components are illustrated in EP Publication No. 1 353 012. Their function is described in this patent application and serve as a normally closed siphon-breaking air gap.

An outlet passage 61 communicates with a funnel member 64 or first flow guide seated in the conical section 63. A seal 66 is positioned between the outer casing 58 and the conical section 63. A second flow guide 67 is connected to the first flow guide 64 and the second flow guide 67 is connected to venturi tube 65 by a passage portion 69 provided by the funnel portion 80 of the first flow guide 64, the conical section 63, and the second flow guide 67. An opening 70 is provided in the passage portion 69 of the second flow guide 67.

Inlet section 35 is interconnected to the tubular body 33 by the connecting portion 62. It includes input connections 72 and 73 communicating with channels 75 and 76 which in turn communicate with passage 78. A check valve assembly, 74 preferably of the ball check type, is connected to input connection 73. It will be seen in FIG. 3 that check valve assembly 74 is shown on an opposing side from that shown in FIG. 2. Also, input connection 72 is shown.

The comparative eductors 10A, 10B and 10C illustrated in FIGS. 4, 8, 9 and 10 include many of the same components as described in FIG 3, with similar numbers referring to similar components except with an "A", "B" or "C" suffix. One of the differences between embodiment 10 and comparative eductors 10A, 10B and 10C is that eductors 10A, 10B and 10C do not include the funnel member 64.

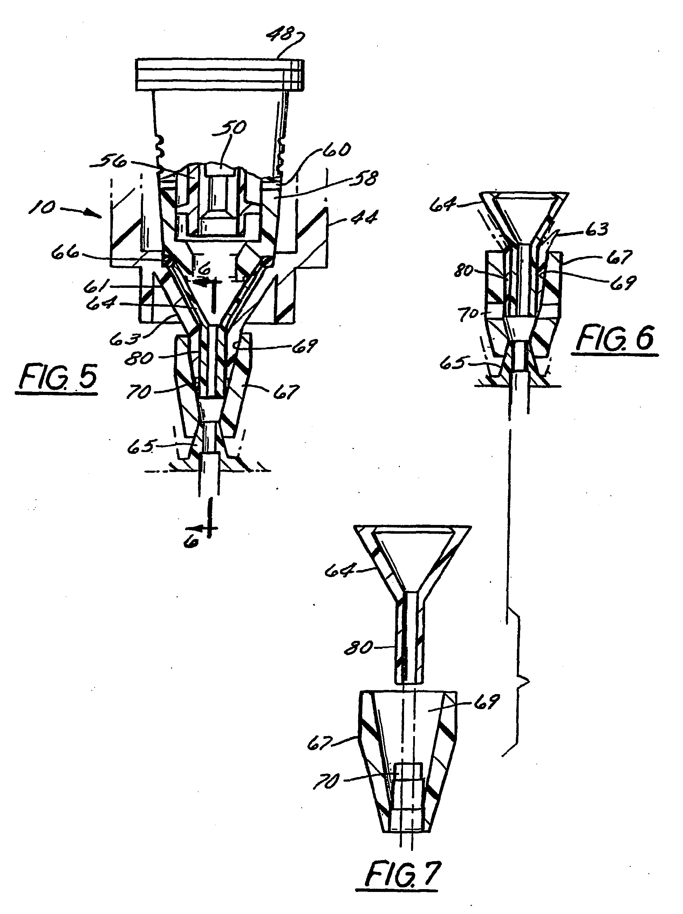

As best illustrated in FIGS. 5-7, embodiment 10 shows the positioning of funnel stem 80 of funnel member 64 over a portion of the opening 70. The purpose of this is explained in the Operation to follow.

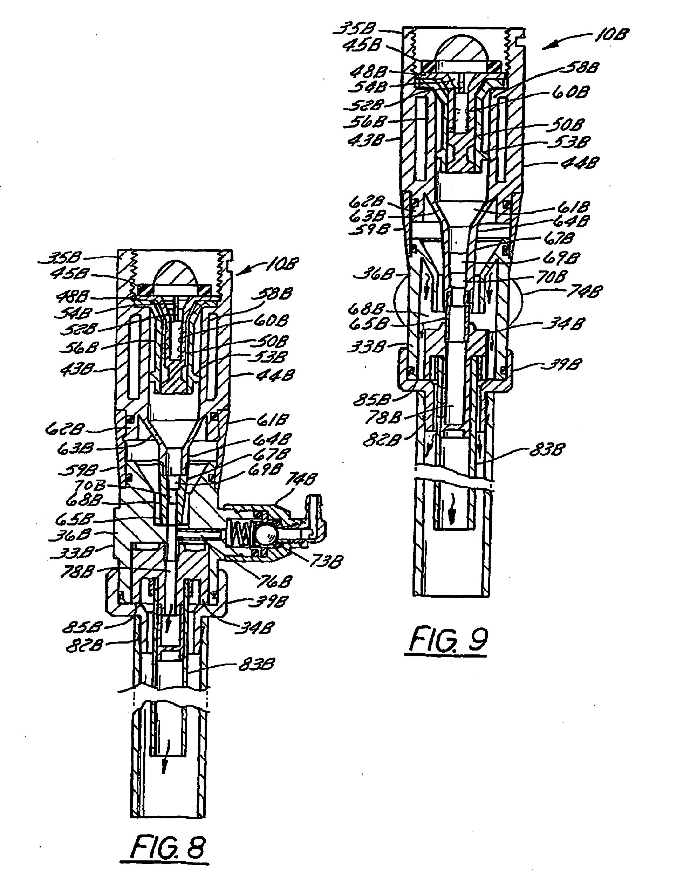

Referring to FIGS 8 and 9, eductor 10B differs from eductor 10A in the configuration and connection between the first flow guide 64B and the second flow guide 67B. Other differences are the one piece molding of outer casing 58B with ribs 43B and 44A and the additional connecting portion 62B between the inlet section 35B and venturi section 36B.

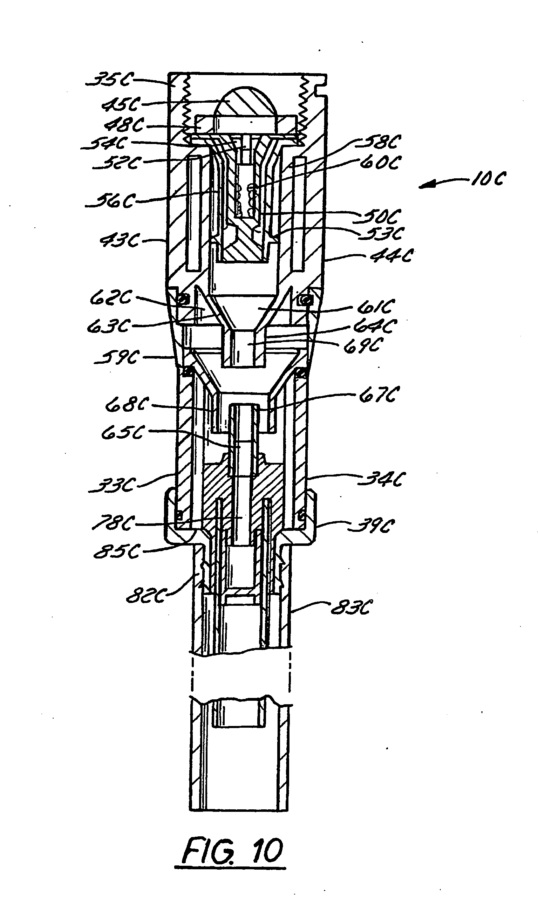

As shown in FIG. 10, eductor 10C differs from the other eductors 10, 10A and 10B in that there is no window in the second flow guide 67C. Instead the first flow guide 64C is spaced from the second flow guide 67C. This provides a diversion of water away from venturi tube 65C.

### Operation

A better understanding of the eductors 10, 10A, 10B and 10C will be had by a description of their operation. Referring first to eductor 10, and FIGS. 3 and 5-7, it will be connected into the dispensing equipment 11 as previously described in conjunction with FIG. 1. Water flows into branch pipe 25 and into inlet section 35. From there it flows through fluid outlets 54 and between barrel 50 and resilient sleeve 56. It then flows through outlet passage 61, into funnel member 64, after which it flows into passage portion 69, over opening 70 and into venturi tube 65. As the water passes into venturi tube 65 it creates a reduction in pressure sufficient to open ball check valve assembly 74 and draw a chemical concentrated from a container 15 into inlet connection 73 and into channel 76. From channel 76 it is mixed with water flowing through passage 78. The combined solution of water and concentrate exits through outlet fitting 39 and outlet tube 29 providing a discharge passage as seen in FIG. 1.

The purpose of ball check valve assembly 74 is to serve as a primer for the vacuum in passage 76 and keep prime on the container 15. It also prevents pressurized water from source to contaminate concentrate to chemical from inlet 73.

An important aspect of eductor 10 is the positioning of funnel portion 80 in conjunction with opening 70. This controls the amount of water flowing through the venturi tube 65 and accordingly, the amount of negative pressure created therein. It will be appreciated that the greater the extension of the funnel stem over the opening 70, the greater the volume of water will flow into the venturi tube 65, and the greater the negative pressure. Diverted water passes through the opening 70 and forms a secondary stream which passes into the chamber 68 and subsequently into outlet port 71, whereafter it is combined with the stream of water and chemical concentrate exiting from passage 78. This concentric flow of the secondary stream and the primary stream through the venturi tube 65 is illustrated in U.S. Patent No. 5,927,338. It is also described in conjunction with eductor 10B in FIG. 9.

Eductors 10A and 10B function in substantially the same manner as described for eductor 10. Instead of funnel stem 80 covering a portion of the opening 70, the openings 70A and 70B are designed with specific dimensions to direct a predetermined amount of water away from the venturi tubes 65A and 65B and thus effect a desired vacuum. FIG. 9 is presented to show the secondary stream which forms as a result of water being diverted from the venturi tube 65B. The stream will flow outwardly into chamber 68B and follow the path shown by the arrows until it exits into hose 82B. At the same time chemical concentrate diluted by the water passing through venturi tube 65B will exit in tube 83B. As stated previously, this flow of a primary and a secondary stream of water and diluted chemical concentrate and a secondary stream of water is described in U.S. Patent 5,927,338.

The eductor 10C shown in FIG. 10 operates without a window. It relies on the spacing of first flow guide 64C from the second flow guide 67C to diver water away from the venturi tube 65C and thereby create the desired vacuum effect. This is a unique feature as it has never been done before in conjunction with a non-air gap eductor.

The siphon-breaking air gap provided by barrel 50 and resilient sleeve 56 operates in the manner described in the previously referred to EP Publication No. 1 353 012. As water flows through fluid outlets 54, it will expand sleeve 56 and water will flow between the sleeve and barrel 50 into funnel member 64 and ultimately to venturi tube 65. When there is no flow of water from the water supply 21 and 25, the resilient sleeve 56 contracts and fits lightly around the barrel 50 to prevent any reverse flow of water. If a siphon action occurs in the water lines 21 and 25, such as when there is a sudden drop in pressure of the main water supply, the resilient sleeve 56 is already sealed against the barrel 50, as already discussed. Fluid instead passes into the space between the sleeve 56 and the outer casing 58 and exits through the vents 60.

It will then be seen that there is now provided an eductor wherein the vacuum profile can be changed without redesigning the entire venturi.

The eductors 10 and 10A have been shown with two inlet ports or connections 72 and 73. If desired, only one could be used as shown in conjunction with eductor 10B. In that instance, the other would be plugged. Alternatively, the inlet connections can be connected to two containers 15 each with the same liquid chemical concentrate or, alternatively, with different chemical concentrate. Ribs 43A, 44A and inlet section 35A are shown as one piece and outer casing 58 as another. If desired, these could be molded from a suitable plastic material as one piece as indicated in FIGS. 8, 9 and 10. Other variations and modifications of this invention will be obvious to those skilled in the art. This invention is not to be limited except as set forth in the following claims.

## Claims

1. An eductor (10) for mixing first and second liquids comprising:
a body member (33) providing a longitudinal axis;
a flow path extending longitudinally through the body member, the flow path defined by a first flow guide (64) and a second flow guide (67), the second flow guide constructed and arranged to receive liquid from the first flow guide;
a closed back flow prevention member (50, 56, 58, 60) operatively associated with the first flow guide;
a venturi tube (65) in the flow path for receiving liquid from the second flow guide, the second flow guide and the venturi tube connected by a passage portion (69);
an opening (70) in the passage portion; and
at least one channel (76) lateral to the longitudinal axis for flowing a liquid concentrate into the venturi tube;
the flow path further including a discharge passage (29) extending from the venturi tube to the outside of the body member, **characterized in that** the second flow guide is defined by a tubular portion (80) extending over the opening in the passage portion, the extension of the tubular portion over the opening in the passage being designed to afford a desired vacuum profile in the venturi tube.

2. The eductor as defined in Claim 1 wherein the second flow guide and the tubular portion are in the form of a funnel member (64).

3. The eductor as defined in Claim 1 wherein the lateral channel includes a check valve (74).

4. The eductor as defined in Claim 1 wherein there are present two lateral channels (75, 76).

5. The eductor as defined in Claim 1 wherein the back flow prevention member includes a resilient sheath (56).

6. A method of establishing a vacuum profile in an eductor which includes extending the tubular portion over the opening in the passage portion as set forth in Claim 1.

7. A method of establishing a vacuum profile in a closed back flow prevention eductor employing the eductor of Claim 1.

## Patentansprüche

1. Ein Ejektor (10) zum Mischen einer ersten und einer zweiten Flüssigkeit, aufweisend:
ein Körperelement (33), das eine Längsachse bereitstellt,
einen Strömungspfad, der sich in Längsrichtung durch das Körperelement hindurch erstreckt, wobei der Strömungspfad von einer ersten Strömungsführung (64) und einer zweiten Strömungsführung (67) definiert wird, wobei die zweite Strömungsführung konstruiert und angeordnet ist, um Flüssigkeit von der ersten Strömungsführung zu empfangen,
ein geschlossenes Rückfluss-Verhinderungselement (50, 56, 58, 60), das der ersten Strömungsführung operativ zugeordnet ist,
ein Venturi-Rohr (65) in dem Strömungspfad zum Empfangen von Flüssigkeit von der zweiten Strömungsführung, wobei die zweite Strömungsführung und das Venturi-Rohr durch einen Durchgangsabschnitt (69) aneinander angeschlossen sind,
eine Öffnung (70) in dem Durchgangsabschnitt, und
mindestens einen zu der Längsachse seitlichen Kanal (76) zum Strömenlassen eines flüssigen Konzentrats in das Venturi-Rohr,
wobei der Strömungspfad ferner einen Ableitungsdurchgang (29) aufweist, der sich von dem Venturi-Rohr zu dem Äußeren des Körperelements erstreckt, **dadurch gekennzeichnet, dass** die zweite Strömungsführung durch einen röhrenförmigen Abschnitt (80) definiert ist, der sich über die Öffnung in dem Durchgangsabschnitt erstreckt, wobei das Erstrecken des röhrenförmigen Abschnitts über die Öffnung in dem Durchgang ausgebildet ist, um ein gewünschtes Vakuumprofil in dem Venturi-Rohr zu ermöglichen.

2. Der Ejektor gemäß Anspruch 1, wobei die zweite Strömungsführung und der röhrenförmige Abschnitt in Form eines Trichterelements (64) ausgebildet sind.

3. Der Ejektor gemäß Anspruch 1, wobei der Seitenkanal ein Rückschlagventil (74) aufweist.

4. Der Ejektor gemäß Anspruch 1, wobei zwei Seitenkanäle (75, 76) vorhanden sind.

5. Der Ejektor gemäß Anspruch 1, wobei das Rückfluss-Verhinderungselement eine nachgiebige Hülle (56) aufweist.

6. Ein Verfahren zum Herstellen eines Vakuumprofils in einem Ejektor, aufweisend das Erstrecken des röhrenförmigen Abschnitts über die Öffnung in dem Durchgangsabschnitt gemäß Anspruch 1.

7. Ein Verfahren zum Herstellen eines Vakuumprofils in einem geschlossenen Rückfluss-Verhinderungs-Ejektor unter Anwendung des Ejektors gemäß Anspruch 1.

## Revendications

1. Ejecteur (10) pour mélanger des premier et deuxième liquides comprenant :
un organe de corps (33) fournissant un axe longitudinal ;
un chemin de flux s'étendant longitudinalement à travers l'organe de corps, le chemin de flux étant défini par un premier guide de flux (64) et un deuxième guide de flux (67), le deuxième guide de flux étant construit et agencé pour recevoir du liquide du premier guide de flux ;
un organe fermé de prévention du reflux (50, 56, 58, 60) associé de manière opérationnelle au premier guide de flux ;
un tube Venturi (65) dans le chemin de flux pour recevoir du liquide du deuxième guide de flux, le deuxième guide de flux et le tube Venturi étant connectés par une partie de passage (69) ;
une ouverture (70) dans la partie de passage ; et
au moins un canal (76) latéral par rapport à l'axe longitudinal pour l'écoulement d'un concentré liquide dans le tube Venturi ;
le chemin de flux comprenant en outre un passage d'évacuation (29) s'étendant du tube Venturi vers l'extérieur de l'organe de corps, **caractérisé en ce que** le deuxième guide de flux est défini par une partie tubulaire (80) s'étendant sur l'ouverture dans la partie de passage, l'extension de la partie tubulaire sur l'ouverture dans le passage étant conçue pour permettre un profil de vide souhaité dans le tube Venturi.

2. Ejecteur selon la revendication 1, dans lequel le deuxième guide de flux et la partie tubulaire sont sous la forme d'un organe d'entonnoir (64).

3. Ejecteur selon la revendication 1, dans lequel le canal latéral comprend un clapet antiretour (74).

4. Ejecteur selon la revendication 1, dans lequel deux canaux latéraux (75, 76) sont présents.

5. Ejecteur selon la revendication 1, dans lequel l'organe de prévention du reflux comprend une gaine élastique (56).

6. Procédé d'établissement d'un profil de vide dans un éjecteur qui comprend l'extension de la partie tubulaire sur l'ouverture dans la partie de passage selon la revendication 1.

7. Procédé d'établissement d'un profil de vide dans un éjecteur fermé de prévention du reflux employant l'éjecteur selon la revendication 1.
